# EUROPEAN PATENT APPLICATION

(11) **EP 4 622 254 A1**
(43) Date of publication of application: **24.09.2025**
(21) Application number: 23910466.4
(22) Date of filing: 25.12.2023
(51) Int. Cl.: H04N 13/344

(54) **VIRTUAL-REALITY DISPLAY METHOD AND APPARATUS, AUGMENTED-REALITY OPTICAL COLLECTION APPARATUS, AND MEDIUM**

(30) Priority: 31.12.2022 CN 202211740661
(71) Applicant: ZTE CORPORATION, Shenzhen, Guangdong 518057 (CN)
(72) Inventor: LUO, Yibao, Shenzhen, Guangdong 518057 (CN); CUI, Qiaoyun, Shenzhen, Guangdong 518057 (CN); JIA, Rong, Shenzhen, Guangdong 518057 (CN)
(74) Representative: Canzler & Bergmeier Patentanwälte Partnerschaft mbB
(86) International application number: PCT/CN2023/141474
(87) International publication number: WO 2024/140540

(57) **Abstract**

Provided in the present disclosure is a virtual reality display method, including: acquiring an augmented reality image of a target object, a relative position relationship between an augmented reality optical collection apparatus and the target object, and coordinate system information of a coordinate system of the augmented reality image, where the augmented reality optical collection apparatus is configured to perform image collection on the target object to collect the augmented reality image; and generating a virtual reality image of the target object according to the relative position relationship between the augmented reality optical collection apparatus and the target object and the coordinate system information of the augmented reality image, where a coordinate system of the virtual reality image corresponds to the coordinate system of the augmented reality image, and a display angle of the virtual reality image is matched with the relative position relationship between the augmented reality optical collection apparatus and the target object. Further provided in the present disclosure are a virtual reality display apparatus, an augmented reality optical collection apparatus, and a computer-readable storage medium.

## Description

### TECHNICAL FIELD

The present disclosure relates to the field of information technology, and particularly relates to a virtual reality display method, a virtual reality display apparatus, an augmented reality optical collection apparatus, and a computer-readable medium.

### BACKGROUND

Characterized in immersion, interactivity, and imagination, the virtual reality (VR) technology enables a user to obtain a very strong immersive experience through sensory simulations such as vision, hearing and touch. However, current virtual reality will generally generate a dizzy feeling, and how to reduce the dizzy feeling of the user when using a virtual reality device has become an urgent technical problem to be solved in the art.

### SUMMARY

Embodiments of the present disclosure provide a virtual reality display method, a virtual reality display apparatus, an augmented reality optical collection apparatus, and a computer-readable medium.

As a first aspect of the present disclosure, there is provided a virtual reality display method, including: acquiring an augmented reality image of a target object, a relative position relationship between an augmented reality optical collection apparatus and the target object, and coordinate system information of a coordinate system of the augmented reality image, wherein the augmented reality optical collection apparatus is configured to perform image collection on the target object to collect the augmented reality image; and generating a virtual reality image of the target object according to the relative position relationship between the augmented reality optical collection apparatus and the target object, and the coordinate system information of the augmented reality image, wherein a coordinate system of the virtual reality image corresponds to the coordinate system of the augmented reality image, and a display angle of the virtual reality image is matched with the relative position relationship between the augmented reality optical collection apparatus and the target object.

As a second aspect of the present disclosure, there is provided a virtual reality display method, including: generating, according to collected image information of a target object, an augmented reality image of the target object; determining coordinate system information of the augmented reality image; determining a relative position relationship between a current augmented reality optical collection apparatus and the target object in a display state; and sending the augmented reality image in the display state, the relative position relationship between the current augmented reality optical collection apparatus and the target object in the display state, and the coordinate system information of the augmented reality image to a virtual reality display apparatus.

As a third aspect of the present disclosure, there is provided a virtual reality display apparatus, including: one or more first processors; and a first memory having one or more programs stored thereon which, when executed by the one or more first processors, cause the one or more first processors to implement the virtual reality display method according to the first aspect of the present disclosure.

As a fourth aspect of the present disclosure, there is provided an augmented reality optical collection apparatus, including: one or more second processors; and a second memory having one or more programs stored thereon which, when executed by the one or more second processors, cause the one or more second processors to implement the virtual reality display method according to the second aspect of the present disclosure.

As a fifth aspect of the present disclosure, there is provided a computer-readable medium storing a computer program thereon which, when executed by a processor, causes the virtual reality display method to be implemented.

In the virtual reality display method of the present disclosure, the augmented reality image of the target object is firstly constructed by the augmented reality optical collection apparatus, and then the virtual reality image is presented to a user wearing a corresponding virtual reality display apparatus (for example, virtual reality display glasses) at the display angle defined above, so that the virtual reality image is observed by the user wearing the virtual reality glasses at an angle consistent with a relative position of the augmented reality optical collection apparatus to the target image, thereby enabling real visual experience of the user wearing the virtual reality glasses.

In the present disclosure, by generating the virtual reality image from the augmented reality image, data required to construct the virtual reality image is effectively reduced, thereby improving processing speed of the virtual reality display apparatus, and correspondingly increasing a refresh frequency, reducing occurrence of delays, and reducing a dizzy feeling of the user.

### BRIEF DESCRIPTION OF DRAWINGS

FIG. 1 is a schematic flowchart of a virtual reality display method according to an embodiment of the present disclosure;
FIG. 2 is a schematic flowchart of a virtual reality display method according to an embodiment of the present disclosure;
FIG. 3 is a schematic flowchart of an operation S140 according to an embodiment of the present disclosure;
FIG. 4 is a schematic flowchart of a virtual reality display method according to an embodiment of the present disclosure;
FIG. 5 is a schematic flowchart of an operation S230 according to an embodiment of the present disclosure;
FIG. 6 is a schematic flowchart of determining a polar coordinate system in an operation S220 according to an embodiment of the present disclosure;
FIG. 7 is a schematic diagram of a wireless measurement module in a polar coordinate system according to an embodiment of the present disclosure;
FIG. 8 is a schematic diagram of a plurality of capturing tracks according to an embodiment of the present disclosure;
FIG. 9 is a schematic diagram of a target object in a rectangular triangular coordinate system, and in a polar coordinate system, according to an embodiment of the present disclosure;
FIG. 10 is a schematic diagram of a virtual reality display apparatus according to an embodiment of the present disclosure;
FIG. 11 is a schematic diagram of an augmented reality optical collection apparatus according to an embodiment of the present disclosure; and
FIG. 12 is a schematic diagram of a computer-readable medium according to an embodiment of the present disclosure.

### DETAIL DESCRIPTION OF EMBODIMENTS

To improve understanding of technical solutions of the present disclosure for those skilled in the art, the following describes the virtual reality display method, the virtual reality display apparatus, the augmented reality optical collection apparatus, and the computer-readable medium provided by the present disclosure in detail with reference to the accompanying drawings.

Exemplary embodiments will be described more fully below with reference to the accompanying drawings, but may be embodied in different forms and should not be construed as limited to the embodiments set forth herein. Rather, the embodiments are provided so that the present disclosure will be thorough and complete, and will fully convey the scope of the present disclosure to those skilled in the art.

The embodiments of the present disclosure and features thereof may be combined with each other as long as they are not contradictory.

As used herein, the term "and/or" includes any and all combinations of one or more of the associated listed items.

Terms used herein is for a purpose of describing specific embodiments only and is not intended to limit the present disclosure. As used herein, singular forms "a", "an" and "the" are intended to include plural forms as well, unless the context clearly indicates otherwise. It will be further understood that as used herein, terms "include", "comprise" and/or "consist of ..." specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having meanings that are consistent with their meanings in the context of the existing art and the present disclosure, and will not be interpreted in an idealized or overly formal sense unless expressly so defined herein.

The present disclosure provides a virtual reality display method.

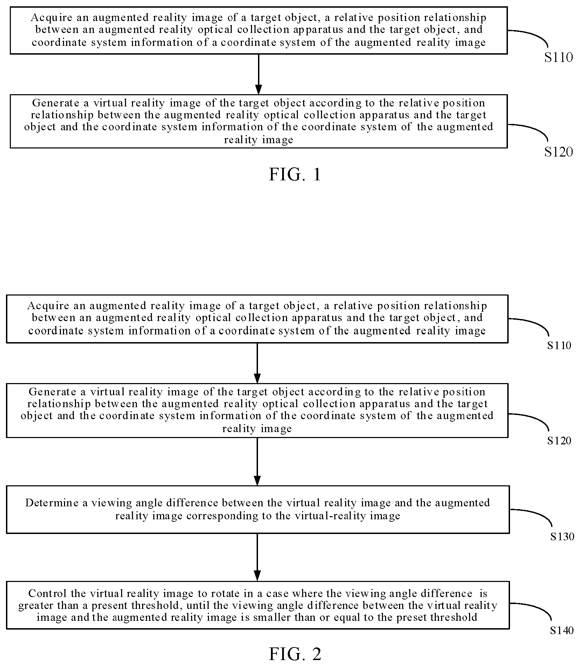

FIG. 1 is a schematic flowchart of a virtual reality display method according to an embodiment of the present disclosure. As shown in FIG. 1, the virtual reality display method may include operations S110 and S120.

At the operation S110, an augmented reality image of a target object, a relative position relationship between an augmented reality optical collection apparatus and the target object, and coordinate system information of a coordinate system of the augmented reality image are acquired. The augmented reality optical collection apparatus is configured to perform image collection on the target object to collect the augmented reality image.

At the operation S120, a virtual reality image of the target object is generated according to the relative position relationship between the augmented reality optical collection apparatus and the target object and the coordinate system information of the augmented reality image. A coordinate system of the virtual reality image corresponds to the coordinate system of the augmented reality image, and a display angle of the virtual reality image is matched with the relative position relationship between the augmented reality optical collection apparatus and the target object.

In the virtual reality display method of the present disclosure, the augmented reality image of the target object is firstly constructed by the augmented reality optical collection apparatus, and then the virtual reality image is presented to a user wearing a virtual reality display apparatus (for example, virtual reality glasses) at the display angle defined above, so that the virtual reality image is observed by the user wearing the virtual reality glasses at an angle consistent with a relative position of the augmented reality optical collection apparatus to the target image, thereby enabling real visual experience of the user wearing the virtual reality glasses.

In the present disclosure, by generating the virtual reality image from the augmented reality image, data required to construct the virtual reality image is effectively reduced, thereby improving processing speed of the virtual reality display apparatus, and correspondingly increasing a refresh frequency, reducing occurrence of delays, and reducing a dizzy feeling of the user.

In the present disclosure, the coordinate system of the augmented reality image may include a polar coordinate system and a three-dimensional coordinate system. In the present disclosure, the coordinate system of the virtual reality image corresponding to the coordinate system of the augmented reality image may include a case where a three-dimensional coordinate system of the virtual reality image is strictly consistent with the three-dimensional coordinate system of the augmented reality image. A driving rotation component (for controlling rotation of the virtual reality image) is managed through the polar coordinate system, and a precise correspondence relationship between the augmented reality image and the virtual reality image is managed through the three-dimensional coordinate system (for example, a real-time maintenance object displayed by the augmented reality apparatus and a virtual maintenance object displayed by the virtual reality apparatus are dynamically aligned in real time in a direction of a viewing angle of the user).

It should be noted that, before execution of the virtual reality display method according to the embodiment of the present disclosure, the following parameters should be initialized:

First, a viewing angle of an operator of the augmented reality optical collection apparatus is consistent with a viewing angle of the augmented reality optical collection apparatus. Generally, the augmented reality optical collection apparatus is a wearable device, and when the operator wears the augmented reality optical collection apparatus, it may be considered that the viewing angle of the operator of the augmented reality optical collection apparatus is consistent with the viewing angle of the augmented reality optical collection apparatus.

Second, a correspondence relationship established between a polar coordinate system of the target object and a real-time coordinate system of the augmented reality image is determined.

Third, a correspondence relationship between the coordinate system of the augmented reality image and the three-dimensional coordinate system of the virtual reality image is determined.

Fourth, a coordinate system relationship between the coordinate system and the display angle (which may be regarded a virtual human eye) of the virtual reality image is determined.

After the above initialization operations, the virtual reality display method of the present disclosure as described above may be executed.

For convenience of implementation, optionally, in the case of the polar coordinate system, the coordinate system of the virtual reality image corresponding to the coordinate system of the augmented reality image may further include a case where a Z-axis of the virtual reality image is consistent with a Z-axis of the augmented reality image. Apparently, the present disclosure is not limited thereto.

While the target object is displayed, the target object is typically rotated to display different parts of the target object. To achieve rotation of the virtual reality image, the target object should be rotated. The augmented reality optical collection apparatus may be kept stationary while rotating the target object. In this case, the relative position relationship between the augmented reality optical collection apparatus and the target object, which is transmitted to the current virtual reality display apparatus, will also change, to enable corresponding rotation of the virtual reality image.

FIG. 2 is a schematic flowchart of a virtual reality display method according to an embodiment of the present disclosure. As shown in FIG. 2, the virtual reality display method includes following operations S110 to S140. The operations S110 and S120 in FIG. 2 are the same as the operations S110 and S120 described with reference to FIG. 1, and thus are not repeated here.

At the operation S130, a viewing angle difference between the virtual reality image and the augmented reality image corresponding to the virtual reality image is determined.

At the operation S140, the virtual reality image is controlled to rotate in a case where the parallax angle is greater than a present threshold, until the viewing angle difference between the virtual reality image and the augmented reality image is smaller than or equal to the preset threshold.

In the present disclosure, as long as the viewing angle difference between the current virtual reality image and the current augmented reality image is determined, the display angle of the virtual reality image may be changed by driving the virtual reality image to rotate according to the parallax angle. The "viewing angle difference" is determined in the polar coordinate.

In the present disclosure, there is no special limitation on the preset threshold, as long as it is an accuracy that the current virtual reality display apparatus can achieve.

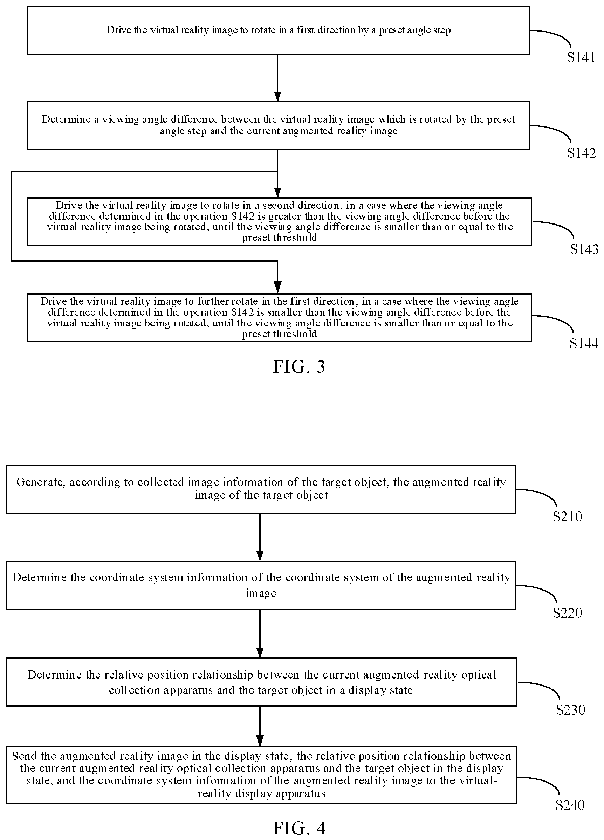

FIG. 3 is a schematic flowchart of the operation S140 according to an embodiment of the present disclosure. As shown in FIG. 3, the operation S140 (i.e., controlling the virtual reality image to rotate) includes following operations S141 to S144.

At the operation S141, the virtual reality image is driven to rotate in a first direction by a preset angle step.

At the operation S142, a viewing angle difference between the virtual reality image which is rotated by the preset angle step and the current augmented reality image is determined.

At the operation S143, the virtual reality image is driven to rotate in a second direction, in a case where the viewing angle difference determined in the operation S142 is greater than the viewing angle difference before the virtual reality image being rotated, until the viewing angle difference is smaller than or equal to the preset threshold. One of the first direction or the second direction is a clockwise direction, and the other is an anticlockwise direction.

The virtual reality image may be rotated by the preset angle step in the clockwise direction first or in the anticlockwise direction first, as long as the parallax angle between the virtual reality image and the augmented reality image can be smaller than the preset threshold.

At the operation S144, the virtual reality image is driven to further rotate in the first direction, in a case where the viewing angle difference determined in the operation S142 is smaller than the viewing angle difference before the virtual reality image being rotated, until the viewing angle difference is smaller than or equal to the preset threshold.

FIG. 4 is a schematic flowchart of a virtual reality display method according to an embodiment of the present disclosure. As shown in FIG. 4, the virtual reality display method includes operations S210 to S240.

At the operation S210, the augmented reality image of the target object is generated according to collected image information of the target object.

At the operation S220, the coordinate system information of the coordinate system of the augmented reality image is determined.

At the operation S230, the relative position relationship between the current augmented reality optical collection apparatus and the target object in a display state is determined.

At the operation S240, the augmented reality image in the display state, the relative position relationship between the current augmented reality optical collection apparatus and the target object in the display state, and the coordinate system information of the augmented reality image are sent to the virtual reality display apparatus.

The virtual reality display method according to the embodiment of the present disclosure is implemented by the augmented reality optical collection apparatus. After the augmented reality image in the display state, the relative position relationship between the current augmented reality optical collection apparatus and the target object in the display state, and the coordinate system information of the augmented reality image are sent to the virtual reality display apparatus, the virtual reality display apparatus may implement the virtual reality display method described with reference to FIG. 1.

The virtual reality display method has been described and illustrated in detail above, and thus is not repeated here.

According to an embodiment of the present disclosure, in a case of the polar coordinate system, the relative position relationship between the current augmented reality optical collection apparatus and the target object includes an angle between the current augmented reality optical collection apparatus and the target object.

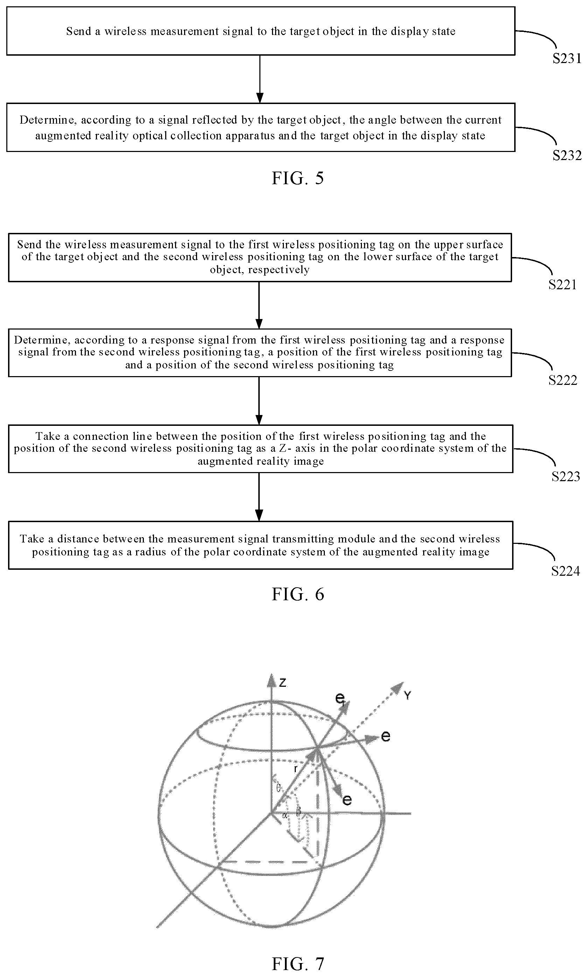

FIG. 5 is a schematic flowchart of the operation S230 according to an embodiment of the present disclosure. As shown in FIG. 5, the operation S230 (i.e., determining the relative position relationship between the current augmented reality collection apparatus and the target object in the display state) includes operations S231 and S232.

At the operation S231, a wireless measurement signal is sent to the target object in the display state.

At the operation S232, the angle between the current augmented reality optical collection apparatus and the target object in the display state is determined according to a signal reflected by the target object.

In the present disclosure, wireless ranging may be used to establish the polar coordinate system, and determine the angle between the current augmented reality optical collection apparatus and the target object. It should be noted that in the present disclosure, the three-dimensional coordinate system may be established by optical collection.

According to an embodiment of the present disclosure, the wireless measurement signal includes a millimeter wave signal.

How to establish the polar coordinate by wireless ranging is described below.

A first wireless positioning tag and a second wireless positioning tag, which are matched with a wireless ranging module and each have a unique ID, are provided on the target object. The first wireless positioning tag and the second wireless positioning tag are disposed on an upper surface and a lower surface of the target object, respectively.

The coordinate system of the augmented reality image includes the polar coordinate system, and the wireless measurement signal is sent from a measurement signal transmitting module integrated into the current augmented reality optical collection apparatus.

FIG. 6 is a schematic flowchart of determining a polar coordinate system in the operation S220 according to an embodiment of the present disclosure. As shown in FIG. 6, the operation S220 (i.e., determining the coordinate system information of the coordinate system of the augmented reality image) includes following operations S221 to S224.

At the operation S221, the wireless measurement signal is sent to the first wireless positioning tag on the upper surface of the target object and the second wireless positioning tag on the lower surface of the target object, respectively.

At the operation S222, a position of the first wireless positioning tag and a position of the second wireless positioning tag are determined according to a response signal from the first wireless positioning tag and a response signal from the second wireless positioning tag.

At the operation S223, a connection line between the position of the first wireless positioning tag and the second wireless positioning tag is taken as a Z-axis in the polar coordinate system of the augmented reality image.

At the operation S224, a distance between the measurement signal transmitting module and the second wireless positioning tag is taken as a radius of the polar coordinate system of the augmented reality image.

FIG. 7 is a schematic diagram of a wireless measurement module in a polar coordinate system.

As described above, the virtual reality image is driven to rotate by determining the viewing angle difference between the virtual reality image and the augmented reality image, and the viewing angle difference between the virtual reality image and the augmented reality image is determined through the wireless ranging technology with a relatively low measurement accuracy, thus, data amount required to be processed when driving virtual reality image computations is reduced, thereby further reducing screen delay.

In the present disclosure, there is no limitation on how to determine the three-dimensional coordinate of the augmented reality image through a optical measurement manner. For example, the augmented reality optical measurement apparatus may be driven to rotate around the target object along at least one track to collect image information.

To obtain an accurate augmented reality image, the augmented reality optical measurement apparatus may be driven to rotate around the target object along a plurality of tracks respectively, to obtain image information as much as possible.

The plurality of tracks may be spaced apart from each other along the Z-axis. For example, the plurality of tracks includes a first capturing track, a second capturing track, and a third capturing track spaced apart from each other along the Z-axis.

To collect accurate image information, a plurality of positioning reflective elements may be provided on the target object.

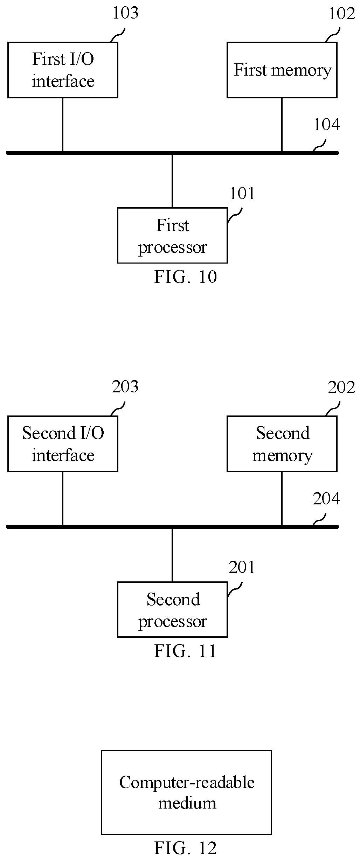

FIG. 10 is a schematic diagram of a virtual reality display apparatus according to an embodiment of the present disclosure. As shown in FIG. 10, the virtual reality display apparatus includes one or more first processors 101 and a first memory 102 having one or more programs stored thereon which, when executed by the one or more first processors 101, cause the one or more first processors 101 to implement the virtual reality display method described with reference to FIG. 1.

The electronic device may further include one or more first I/O interfaces 103 connected between the first processor and the first memory, and configured to enable information interaction between the first processor and first the memory.

The first processor 101 is a device with a data processing capability, including but not limited to a central processing unit (CPU), or the like. The first memory 102 is a device with a data storage capability, including but not limited to, a random access memory (RAM, more specifically, SDRAM, DDR, or the like), a read-only memory (ROM), an electrically erasable programmable read-only memory (EEPROM) or a flash memory (FLASH). The first I/O interface (read/write interface) 103 is connected between the first processor 101 and the first memory 102 to enable information interaction between the first processor 101 and the first memory 102, and includes, but is not limited to, a data bus or the like.

According to an embodiment of the present disclosure, the first processor 101, the first memory 102, and the first I/O interface 103 are interconnected via a first bus 104, and then further connected to other components of a computing device.

FIG. 11 is a schematic diagram of an augmented reality optical collection apparatus according to an embodiment of the present disclosure. As shown in FIG. 11, there is provided the augmented reality optical collection apparatus, including: one or more second processors 201 and a second memory 202 having one or more programs stored thereon which, when executed by the one or more second processors 201, cause the one or more second processors 201 to implement the virtual reality display method described with reference to FIG. 2.

The electronic device may further include one or more second I/O interfaces 203 connected between the second processor 201 and the second memory 202, and configured to enable information interaction between the second processor and second the memory.

The second processor 201 is a device with a data processing capability, including but not limited to a central processing unit (CPU), or the like. The second memory 202 is a device with a data storage capability, including but not limited to, a random access memory (RAM, more specifically SDRAM, DDR, or the like), a read-only memory (ROM), an electrically erasable programmable read-only memory (EEPROM) or a flash memory (FLASH). The second I/O interface (read/write interface) 203 is connected between the second processor 201 and the second memory 202 to enable information interaction between the second processor 201 and the second memory 202, and includes, but is not limited to, a data bus or the like.

In some embodiments, the second processor 201, the second memory 202, and the second I/O interface 203 are interconnected via a second bus 204, and then further connected to other components of a computing device.

According to an embodiment of the present disclosure, the augmented reality optical collection apparatus further includes an optical collection module configured to collect the image information of the target object.

According to an embodiment of the present disclosure, the optical collection module may include augmented reality glasses with a camera. As another implementation of the present disclosure, the optical collection module may include at least one camera.

According to an embodiment of the present disclosure, the optical collection module is moved along the at least one capturing track surrounding the target object, to collect the image information of the target object.

According to an embodiment of the present disclosure, the optical collection module is moved along the plurality of capturing tracks which are spaced apart from each other along the Z-axis of the augmented reality image.

According to an embodiment of the present disclosure, the augmented reality optical collection apparatus further includes the measurement signal transmitting module configured to send the wireless measurement signal to the target object.

According to the embodiment of the present disclosure, the measurement signal transmitting module may include the wireless ranging module.

As described above, the polar coordinate system may be established through the wireless ranging technology. Specifically, how to establish the polar coordinate by the wireless ranging technology through an optional implementation is described below.

The first wireless positioning tag and the second wireless positioning tag, which are matched with the wireless ranging module and each have the unique ID, are provided on the target object. The first wireless positioning tag and the second wireless positioning tag are disposed on the upper surface and the lower surface of the target object, respectively.

As described above with reference to FIG. 6, the operation of establishing the polar coordinate system (i.e., the operation S220) includes following operations S221 to S224.

At the operation S221, the wireless measurement signal is sent to the first wireless positioning tag on the upper surface of the target object and the second wireless positioning tag on the lower surface of the target object, respectively.

At the operation S222, the position of the first wireless positioning tag and the position of the second wireless positioning tag are determined according to the response signal from the first wireless positioning tag and the response signal from the second wireless positioning tag.

At the operation S223, the connection line between the position of the first wireless positioning tag and the second wireless positioning tag is taken as the Z- axis in the polar coordinate system of the augmented reality image.

At the operation S224, the distance between the measurement signal transmitting module and the second wireless positioning tag is taken as the radius of the polar coordinate system of the augmented reality image.

In the present disclosure, the wireless measurement module may be an ultra-wide band (UWB) module, and both the first wireless positioning tag and the second wireless positioning tag are UWB tags.

According to an embodiment of the present disclosure, the augmented reality optical collection apparatus further includes the at least one reflective positioning element on the target object.

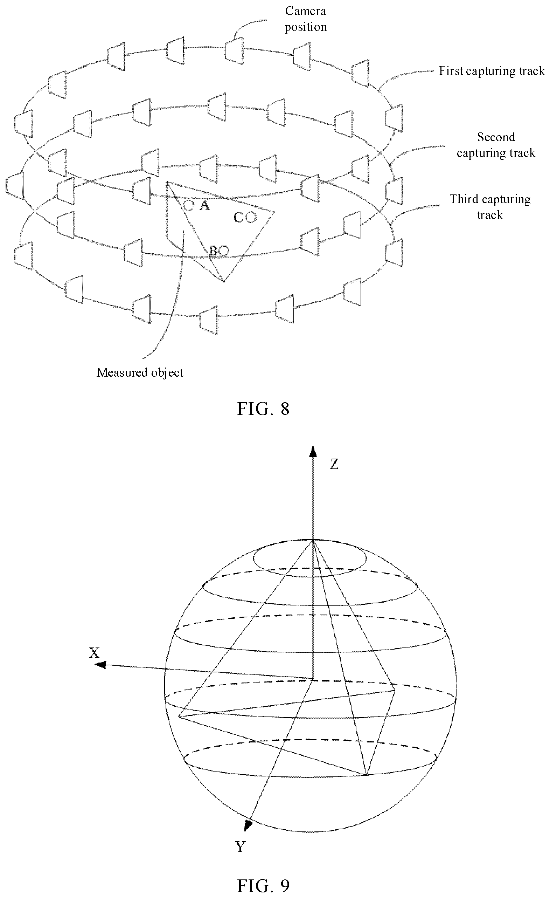

FIG. 8 is a schematic diagram of the plurality of capturing tracks according to an embodiment of the present disclosure. As shown in FIG. 8, the augmented reality optical collection apparatus includes a reflective positioning element A, a reflective positioning element B, and a reflective positioning element C.

FIG. 9 is a schematic diagram of the target object in a rectangular triangular coordinate system, and in the polar coordinate system, according to an embodiment of the present disclosure. Positions of the camera, the reflective positioning element A, the reflective positioning element B and the reflective positioning element C are as shown in FIG. 8, where the camera, and a rectangular triangular coordinate system constructed by the reflective positioning element A, the reflective positioning element B and the reflective positioning element C are mapped with a coordinate system constructed by a VR virtual object and an observer in one-to -one correspondence. The rotation of the virtual reality display image in the viewing angle is driven based on an angle difference of key points.

FIG. 12 is a schematic diagram of a computer-readable medium according to an embodiment of the present disclosure. As shown in FIG. 12, there is provided a computer-readable medium storing a computer program thereon which, when executed by a processor, causes the virtual reality display method of the present disclosure to be implemented.

In the present disclosure, an application scenario of the virtual reality display method is not particularly limited. For example, the virtual reality display method may be used during online training, or online instruction.

Specifically, the virtual reality display method may be adopted in a process of online guiding of device maintenance.

Two UWB tags are attached to upper and lower symmetrical surfaces of an object under maintenance at the side of the augmented reality optical collection apparatus, the polar coordinate system of the augmented reality image is established through the wireless measurement module in the augmented reality optical collection apparatus, and real-time three-dimensional coordinates of the augmented reality image are established through the optical collection module in the augmented reality optical collection apparatus.

The virtual reality image established in the virtual display method described above may be regarded as a three-dimensional maintenance instruction, so that the maintenance process may be better shown. Further through voice prompt, the operator at the side of the virtual reality display apparatus may be guided to maintain an actual object.

Those of ordinary skill in the art will appreciate that all or some operations of the above described method, function modules/units in the system and apparatus may be implemented as software, firmware, hardware, and suitable combinations thereof. In a hardware implementation, the division between the function modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic storage device, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present disclosure as set forth in the appended claims.

## Claims

1. A virtual reality display method, comprising:
acquiring an augmented reality image of a target object, a relative position relationship between an augmented reality optical collection apparatus and the target object, and coordinate system information of a coordinate system of the augmented reality image, wherein the augmented reality optical collection apparatus is configured to perform image collection on the target object to collect the augmented reality image; and
generating a virtual reality image of the target object according to the relative position relationship between the augmented reality optical collection apparatus and the target object and the coordinate system information of the coordinate system of the augmented reality image, wherein a coordinate system of the virtual reality image corresponds to the coordinate system of the augmented reality image, and a display angle of the virtual reality image is matched with the relative position relationship between the augmented reality optical collection apparatus and the target object.

2. The virtual reality display method according to claim 1, wherein the coordinate system of the augmented reality image comprises a polar coordinate system, the coordinate system of the virtual reality image comprises a polar coordinate system, and
under the polar coordinate system, the coordinate system of the virtual reality image corresponding to the coordinate system of the augmented reality image comprises a case where a Z-axis of the virtual reality image is consistent with a Z-axis of the augmented reality image.

3. The virtual reality display method according to claim 1 or 2, wherein the virtual reality display method further comprises:
determining a viewing angle difference between the virtual reality image and the augmented reality image corresponding to the virtual reality image; and
controlling the virtual reality image to rotate in a case where the parallax angle is greater than a preset threshold, until the viewing angle difference is smaller than or equal to the preset threshold.

4. The virtual reality display method according to claim 3, wherein controlling the virtual reality image to rotate comprises:
driving the virtual reality image to rotate in a first direction by a preset angle step;
determining a viewing angle difference between the virtual reality image which is rotated by the preset angle step and the current augmented reality image;
driving the virtual reality image to rotate in a second direction in a case where the viewing angle difference is greater than the viewing angle difference before the virtual reality image is rotated, until the viewing angle difference is smaller than or equal to the preset threshold, wherein one of the first direction or the second direction is a clockwise direction, and the other is an anticlockwise direction; or
driving the virtual reality image to further rotate in the first direction in a case where the viewing angle difference is smaller than the viewing angle difference before the virtual reality image is rotated, until the viewing angle difference is smaller than or equal to the preset threshold.

5. A virtual reality display method, comprising:
generating, according to collected image information of a target object, an augmented reality image of the target object;
determining coordinate system information of a coordinate system of the augmented reality image;
determining a relative position relationship between a current augmented reality optical collection apparatus and the target object in a display state; and
sending the augmented reality image in the display state, the relative position relationship between the current augmented reality optical collection apparatus and the target object in the display state, and the coordinate system information of the augmented reality image to a virtual reality display apparatus.

6. The virtual reality display method according to claim 5, wherein under a polar coordinate system, the relative position relationship between the current augmented reality optical collection apparatus and the target object comprises an angle between the current augmented reality optical collection apparatus and the target object, and
determining the relative position relationship between the current augmented reality collection apparatus and the target object in the display state comprises:
sending a wireless measurement signal to the target object in the display state; and
determining, according to a signal reflected by the target object, the angle between the current augmented reality optical collection apparatus and the target object in the display state.

7. The virtual reality display method according to claim 6, wherein the wireless measurement signal comprises a millimeter wave signal.

8. The virtual reality display method according to claim 6, wherein the coordinate system of the augmented reality image comprises the polar coordinate system, the wireless measurement signal is sent from a measurement signal transmitting module integrated into the current augmented reality optical collection apparatus, and determining the coordinate system information of the coordinate system of the augmented reality image comprises:
sending the wireless measurement signal to a first wireless positioning tag on an upper surface of the target object and a second wireless positioning tag on a lower surface of the target object, respectively,
determining, according to a response signal from the first wireless positioning tag and a response signal from the second wireless positioning tag, a position of the first wireless positioning tag and a position of the second wireless positioning tag;
taking a connection line between the position of the first wireless positioning tag and the second wireless positioning tag as a Z-axis in the polar coordinate system of the augmented reality image; and
taking a distance between the measurement signal transmitting module and the second wireless positioning tag as a radius of the polar coordinate system of the augmented reality image.

9. A virtual reality display apparatus, comprising:
one or more first processors; and
a first memory having one or more programs stored thereon which, when executed by the one or more first processors, cause the one or more first processors to implement the virtual reality display method according to any one of claims 1 to 4.

10. An augmented reality optical collection apparatus, comprising:
one or more second processors; and
a second memory having one or more programs stored thereon which, when executed by the one or more second processors, cause the one or more second processors to implement the virtual reality display method according to any one of claims 5 to 8.

11. The augmented reality optical collection apparatus according to claim 10, wherein the augmented reality optical collection apparatus further comprises:
an optical collection module configured to be moved along at least one capturing track surrounding the target object, to collect image information of the target object.

12. The augmented reality optical collection apparatus according to claim 11, wherein the optical collection module is moved along a plurality of capturing tracks which are spaced apart from each other along a Z-axis of the augmented reality image.

13. The augmented reality optical collection apparatus according to any one of claims 10 to 12, wherein the augmented reality optical collection apparatus further comprises:
a measurement signal transmitting module configured to send a wireless measurement signal to the target object.

14. The augmented reality optical collection apparatus according to claim 13, wherein the augmented reality optical collection apparatus further comprises at least one positioning reflective element on the target object;
the augmented reality optical collection apparatus further comprises a first wireless positioning tag and a second wireless positioning tag, wherein the first wireless positioning tag is disposed on an upper surface of the target object, and the second wireless positioning tag is disposed on a lower surface of the target object; and
the measurement signal transmitting module is configured to send a positioning signal to the first wireless positioning tag on the upper surface of the target object and the second wireless positioning tag on the lower surface of the target object, respectively, and receiving a response signal from the first wireless positioning tag and a response signal from the second wireless positioning tag.

15. A computer-readable medium storing a computer program thereon which, when executed by a processor, causes the virtual reality display method according to any one of claims 1 to 8 to be implemented.
